Europäisches Patentamt

European Patent Office

Office européen des brevets

(11) Veröffentlichungsnummer: **0 227 719 B1**

# EUROPÄISCHE PATENTSCHRIFT

(45) Veröffentlichungstag der Patentschrift: **08.04.92**

(21) Anmeldenummer: **86903372.0**

(22) Anmeldetag: **10.06.86**

(86) Internationale Anmeldenummer:
**PCT/EP86/00347**

(87) Internationale Veröffentlichungsnummer:
**WO 87/00336 (15.01.87 87/01)**

(51) Int. Cl.⁵: **G11B 15/467**, G05D 13/62

(54) **VIDEORECORDER.**

(30) Priorität: **27.06.85 DE 3522934**

(43) Veröffentlichungstag der Anmeldung:
**08.07.87 Patentblatt 87/28**

(45) Bekanntmachung des Hinweises auf die
Patenterteilung:
**08.04.92 Patentblatt 92/15**

(84) Benannte Vertragsstaaten:
**AT BE CH DE FR GB IT LI LU NL SE**

(56) Entgegenhaltungen:
**US-A- 3 569 808**
**US-A- 3 621 353**
**US-A- 3 668 492**

**Patent Abstracts of Japan, vol. 7, no. 70
(P-185)(1215), 23 March 1983**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **LINK, Hermann
Augenmoosstrasse 10
W-7730 VS-Obereschach(DE)**
Erfinder: **KAADEN, Jürgen
Im Tannhörnle 10
W-7730 VS-Villingen(DE)**

## Beschreibung

Bei handelsüblichen Videorecordern nach dem Schrägspurverfahren ist es bekannt, für Kopftrommel- und Magnetbandantrieb automatische Motorsteuerungen einzusetzen, die für ein Zusammenwirken beider Antriebe optimale Gleichlaufbedingungen herstellen. Diese Präzisionssteuerungen, auch Servosteuerungen genannt, arbeiten allgemein mit zwei gekoppelten Regelkreisen. Ein Regelkreis dient der Geschwindigkeitssteuerung, er wird auch Geschwindigkeitsservo genannt und ist als Grobregelung anzusehen, während die Feinregelung zur Anpassung von Kopftrommelantrieb und Magnetbandantrieb zueinander durch einen Phasenregelkreis, auch Phasenservo genannt, durchgeführt wird.

Der Geschwindigkeitsservo stellt den Geschwindigkeitsfehler eines Motors z.B. mit Hilfe eines Frequenzgenerators fest, der mit dem Motor mechanisch gekoppelt ist und dessen Frequenz proportional zur Motordrehzahl ist. Aus dieser Frequenz wird in einem Frequenz-Spannungsumsetzer eine Gleichspannung gewonnen, die der Nachsteuerung des Motors dient, wenn Frequenzabweichungen von der Sollfrequenz vorliegen. Da eine derartige Regelung keine Verknüpfung mit Regelvorgängen anderer Motore bzw. Antriebe zuläßt, muß zusätzlich zur Geschwindigkeitsregelung eine Phasenregelung erfolgen, durch die Zuordnungen zwischen den Regelsystemen verschiedener Antriebe hergestellt werden. Für eine Phasenregelung sind Referenzquellen erforderlich, die bei der Verknüpfung von verschiedenen Regelanordnungen als gemeinsame Quelle ausgebildet sind.

So dient z.B. beim VHS-Videorecordersystem jeder zweite vom Fernsehsignal gelieferte Vertikalimpuls nach einer Umwandlung in eine Rechteckschwingung von 25 Hz, entsprechend 40 ms als Referenz für den Kopftrommelantrieb im Aufnahmebetrieb. Die Vertikalimpulse werden außerdem nach einer Umformung in eine Rechteckschwingung auf eine besondere Steuerspur auf das Magnetband aufgezeichnet. Sie werden bei Wiedergabe im Vergleich zu der Position des pickup Pulses des Kopftrommelantriebes zur Phasensteuerung des Magnetbandantriebes ausgenutzt.

Aus dem Vergleich der auf dem Band aufgezeichneten, umgeformten Vertikalimpulse mit der Position des pickup Pulses wird eine Phasenregelspannung für den Magnetebandantrieb erzeugt. Da die Eigengeschwindigkeit des Magnetbandantriebes nach der VHS-Norm innerhalb einer Toleranz von ± 0,5 % schwanken kann, ist es möglich, daS bei Abspielen von fremdbespielten Bändern durch den Phasenservo relativ große Abweichungen ausgeglichen werden müssen. Das bedeutet, daß Gleichlaufschwankungen auftreten können, so daß die Spurlage nachgestellt werden muß.

Es ist Aufgabe der Erfindung, neben den für Normalgeschwindigkeit und einer vorgegebenen Bildsuchlaufgeschwindigkeit ausgelegten bekannten Servoregelungen zusätzlich eine automatische Regelmöglichkeit für optimale Bildwiedergabe zu schaffen, durch die beliebige Bildsuchlaufgeschwindigkeiten einstellbar sind und durch die bei Abspielen von Fremdaufnahmen mit Eigengeschwindigkeitsabweichungen Geschwindigkeitsfehler ausgeglichen werden.

Diese Aufgabe wird durch einen Videorecorder mit Geschwindigkeits-und Phasenregelungen nach dem Oberbegriff des Anspruchs 1 gelöst, die im Kennzeichen des Anspruchs 1 beschrieben ist. Weiterbildungen der Erfindung werden in den Unteransprüchen beschrieben.

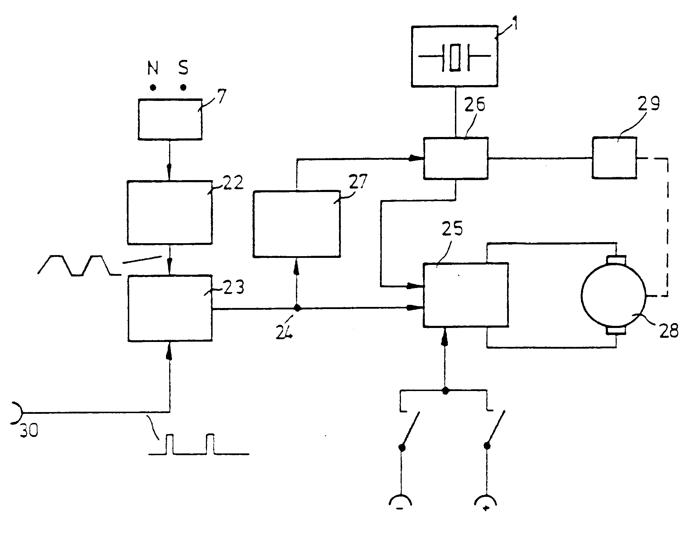

Im Prinzip wird bei Abspielen von Fremdaufnahmen aus einem Integrator, der die anfallenden Phasenfehlerspannungen des Bandantriebphasenservos integriert, eine Korrekturspannung an den Geschwindigkeitsservo ausgegeben, die eine Verschiebung der Geschwindigkeitsfehlerspannung bewirkt. Dadurch wird erreicht, daß die Phasennachregelung durch den Phasenservo, die wie beschrieben im 40 ms-Rhythmus erfolgt, nur geringen Schwankungen unterliegt, so daß Gleichlauf- und Trackingfehler vermieden werden. Anhand der Figur soll die Erfindung beispielhaft näher erläutert werden. Sie zeigt in einem Blockschaltbild die automatische Geschwindigkeitskompensation für den Magnetbandantrieb bei Wiedergabe.

Das Signal des pickup Generators 7 dient für den Bandantriebphasenservo als Referenz. Es wird einem Wandler 22 zugeführt, in welchem eine Umformung in eine trapezförmige Spannung erfolgt. Die im 40 ms-Rhythmus ansteigenden Flanken dieser Spannung werden in der Sample- and Hold-Schaltung 23 mit der Phasenlage von kurzen Impulsen verglichen, die aus den am Eingang 30 zugeführten, bei der Aufnahme auf einer Kontrollspur aufgezeichneten und umgeformten Vertikalsynchronimpulsen des Fernsehsignales bestehen.

Wenn die Wiedergabe von eigenbespielten Bändern erfolgt, ist die am Ausgang 24 der Sample- and Hold-Schaltung 23 abgegebene Phasenfehlerspannung sehr gering, da Aufnahme- und Wiedergabegeschwindigkeit nur in engen Toleranzbereichen voneinander abweichen. Werden allerdings Bänder wiedergegeben, die mit einem Fremdrecorder aufgenommen worden sind, können zwischen Aufnahme- und Wiedergabegeschwindigkeit systembedingte Differenzen auftreten, die zu einer dauernden Phasenfehlerspannungsausgabe am Ausgang 24 führen. Liegt ein derartiger Fall vor, bewirkt diese Phasenfehlerspannung, die auch einem Integrator 27 zugeführt wird, an dessen Ausgang eine Spannungsausgabe an den Geschwindigkeitsservo, die so lange eine bleibende Veränderung im Geschwindigkeitsservoregelkreis bewirkt, bis eine neue Ausgabe aus dem Integrator erfolgt. Durch diese Maßnahme wird erreicht, daß die eigentliche Phasenregelung nur relativ geringe Phasenänderungen auszugleichen hat. In dem beispielhaften Blockschaltbild wird diese vom Integrator 27 abgegebene Spannung an einen Eingang einer Frequenz-Vergleichsschaltung 26 gelegt, deren Ausgang mit einem ersten Eingang der Additionsschaltung 25 verbunden ist. An den zweiten Eingang wird die Phasenfehlerspannung von Ausgang 24 der Sample- and Hold-Schaltung 23 angelegt. Die abgegebene Spannung von der Additionsschaltung 25 dient der Steuerung des Bandantriebsmotors 28, der mechanisch starr mit dem Frequenzgenerator 29 verbunden ist. Am Ausgang des Frequenzgenerators entsteht eine zur Motordrehzahl proportionale Frequenz, die ihrerseits für die Geschwindigkeitsregelung der Frequenz-Vergleichsschaltung 26 zugeführt wird, die als Referenzfrequenz das heruntergeteilte Signal eines Quarzoszillators 1 benutzt.

Der Integrator 27 kann bei Bildsuchlaufbetrieb abgeschaltet werden, kann aber auch angeschaltet bleiben und nur während einer Geschwindigkeitsänderung an seinem Ausgang zu "null" gesetzt werden. Auch ist es möglich, bei bestimmten Geschwindigkeiten, bei denen enge Phasenbeziehungen zwischen den von der Kontrollspur abgegebenen Impulsen mit der erzeugten trapezförmigen Spannung erzielt werden, eine Korrekturspannung abzugeben. Bei asynchronen Impulsen bestimmter Geschwindigkeiten, aber auch bei fehlenden Impulsen von der Kontrollspur kann der letzte Integrationswert gespeichert werden, um dadurch eine unbeabsichtigte Veränderung der Geschwindigkeit zu vermeiden.

An einen weiteren Eingang der Additionsschaltung 25 sind zwei Schalter angeschlossen, durch deren Betätigung die Bandgeschwindigkeit je nach Wahl des Schalters in der einen oder in der anderen Richtung veränderbar ist. Dabei ist es möglich, im Bildsuchlaufbetrieb eine Umkehrung der Motordrehrichtung zu erreichen.

3

EP 0 227 719 B1

Bezugszeichenliste

| | | | |
|---|---|---|---|
| 1 Quarzoszillator | 26 Frequenzvergleichsschaltung | 51 | 76 |
| 2 | 27 Integrator | 52 | 77 |
| 3 | 28 Bandantriebsmotor | 53 | 78 |
| 4 | 29 Frequenzgenerator | 54 | 79 |
| 5 | 30 Eingang | 55 | 80 |
| 6 | 31 | 56 | 81 |
| 7 Pickup-Pulse Generator | 32 | 57 | 82 |
| 8 | 33 | 58 | 83 |
| 9 | 34 | 59 | 84 |
| 10 | 35 | 60 | 85 |
| 11 | 36 | 61 | 86 |
| 12 | 37 | 62 | 87 |
| 13 | 38 | 63 | 88 |
| 14 | 39 | 64 | 89 |
| 15 | 40 | 65 | 90 |
| 16 | 41 | 66 | 91 |
| 17 | 42 | 67 | 92 |
| 18 | 43 | 68 | 93 |
| 19 | 44 | 69 | 94 |
| 20 | 45 | 70 | 95 |
| 21 | 46 | 71 | 96 |
| 22 Wandler | 47 | 72 | 97 |
| 23 Sample and Hold Schaltung | 48 | 73 | 98 |
| 24 Ausgang von 23 | 49 | 74 | 99 |
| 25 Additionsschaltung | 50 | 75 | 100 |

**Patentansprüche**

1. Videorecorder mit einem Motor für Kopftrommel- und einem Motor für Magnetbandantrieb, mit elektronischen Einrichtungen für die Geschwindigkeits- und Phasenregelung beider Motore, mit bedien-

4

baren Funktionstasten, von denen zwei Funktionstasten bei betätigter Wiedergabetaste für Bildsuchlaufbetrieb vorwärts und rückwärts eingerichtet sind, und bei dem im Wiedergabebetrieb die Geschwindigkeit des Bandantriebsmotors durch eine Korrekturspannung veränderbar ist, welche bei Abweichungen von einer durch die Systemnorm festgelegten Geschwindigkeit aus einer in einer Phasenvergleichsstufe (23) erzeugten Phasenfehlerspannung abgeleitet ist, **dadurch gekennzeichnet**, daß zur Erzeugung der Korrekturspannung die Phasenfehlerspannung gleichzeitig einem ersten Eingang einer den Bandan-triebsmotor (28) steuernden Additionsschaltung (25) des Bandantriebsservos und einem Integrator (27) zugeführt ist, dessen Ausgangsspannung an einem Eingang einer Frequenzvergleichsschaltung (26) des Bandantriebsservos angelegt ist, von der ein zweiter Eingang der Additionsschaltung (25) angesteuert wird.

2. Videorecorder nach Anspruch 1, dadurch gekennzeichnet, daß bei Bildsuchlaufbetrieb der Integrator (27) abschaltbar ist.

3. Videorecorder nach Anspruch 1, dadurch gekennzeichnet, daß bei Bildsuchlaufbetrieb der Integrator (27) eingeschaltet ist und die Ausgabe der Korrekturspannung während einer Änderung der Bandgeschwindigkeit zu "null" gesetzt wird und nach einer vorgegebenen Zeitfunktion auf den durch Phasenfehler erzeugten Wert ansteigt.

4. Videorecorder nach Anspruch 1 und 3, dadurch gekennzeichnet, daß bei Bildsuchlaufbetrieb der Integrator (27) bei fehlenden Phasenmeßimpulsen den letzten Integrationswert beibehält.

## Claims

1. A video recorder with a motor for a head drum drive and a motor for a magnetic tape drive, with electronic devices for the speed and phase control of both motors, with operable function keys, two of which function keys if the playback key has been actuated are set up for picture search mode forwards and backwards, and in which in the playback mode the speed of the tape drive motor can be changed by a correction voltage which is derived, during deviations from a speed fixed by the system standard, from a phase error voltage produced in a phase comparison stage (23), **characterised in that** in order to produce the correction voltage the phase error voltage is supplied at the same time to a first input of an addition circuit (25) of the tape drive servo, which circuit controls the tape drive motor (28), and to an integrator (27), the output voltage of which is applied to one input of a frequency comparison circuit (26) of the tape drive servo, a second input of the addition circuit (25) being driven by said comparison circuit (26).

2. A video recorder according to claim 1, **characterised in that** with picture search operation the integrator (27) can be switched off.

3. A video recorder according to claim 1, **characterised in that** with picture search mode operation the integrator (27) is switched on and the output of the correction voltage is set to "zero" during a change in the tape speed and rises to the value produced by phase errors according to a predetermined time function.

4. A video recorder according to claim 1 and 3, **characterised in that** with picture search mode operation the integrator (27) retains the last integration value when there are no phase measurement pulses.

## Revendications

1. Magnétoscope avec un moteur pour la commande du tambour des têtes et un moteur pour la commande de la bande magnétique, avec des dispositifs électroniques pour le réglage de la vitesse et des phases des deux moteurs, avec des touches de fonction de service, deux de ces touches de fonction étant conçues pour la marche avant et la marche arrière lorsque la touche de lecture est actionnée en mode de recherche d'image et dans lequel, en mode de lecture, la vitesse du moteur de commanda de la bande peut varier grâce à une tension de correction qui est dérivée d'une tension d'erreur de phase produite dans un étage comparateur de phase (23), pour des écarts par rapport à une vitesse fixée par la norme du système, **caractérisé en ce** que, pour produire la tension de correction, la tension d'erreur de phase est amenée simultanément à une première entrée d'un circuit addeur (25) de la servocommande de la bande qui commande le moteur de commande de la bande (28) et à un intégrateur (27) dont la tension de sortie est appliquée à une entrée d'un circuit comparateur de fréquence de la servocommande de la bande (26) dont une seconde entrée du circuit addeur (25) est excitée.

2. Magnétoscope selon la revendication 1, **caractérisé en ce** que l'intégrateur (27) peut être mis hors circuit en mode de recherche d'images.

3. Magnétoscope selon la revendication 1, **caractérisé en ce** qu'en mode de recherche d'image l'intégrateur (27) est en circuit et que la sortie de la tension de correction est mise à "zéro" pendant une variation de la vitesse de la bande et qu'après une fonction de temps prédéterminée elle monte à la valeur produite par l'erreur de phase.

4. Magnétoscope selon la revendication 1 et 3, **caractérisé en ce** qu'en mode de recherche d'images l'intégrateur (27) conserve la dernière valeur d'intégration en cas d'impulsions de mesure de phase manquantes.